# EUROPÄISCHE PATENTSCHRIFT

(11) **EP 1 086 410 B1**
(45) Veröffentlichungstag und Bekanntmachung des Hinweises auf die Patenterteilung: **09.01.2002**
(21) Anmeldenummer: 99923582.3
(22) Anmeldetag: 12.05.1999
(51) Int. Cl.: G05D 1/02, G05D 1/03, G05B 15/02, G01N 21/86, B60L 3/00

(54) **AUTONOM NAVIGIERENDES SYSTEM MIT HINDERNISERKENNUNG**
AUTONOMOUS NAVIGATING SYSTEM HAVING OBSTACLE RECOGNITION
SYSTEME DE NAVIGATION AUTONOME A RECONNAISSANCE D'OBSTACLES

(30) Priorität: 13.05.1998 DE 19821306
(43) Veröffentlichungstag der Anmeldung: 28.03.2001
(73) Patentinhaber: GMD - FORSCHUNGSZENTRUM INFORMATIONSTECHNIK GMBH, D-53754 Sankt Augustin (DE)
(72) Erfinder: LICHT, Ulrich, D-53844 Troisdorf (DE)
(74) Vertreter: Hilleringmann, Jochen, Dipl.-Ing.
(86) Internationale Anmeldenummer: EP9903258
(87) Internationale Veröffentlichungsnummer: WO9959043

(56) Entgegenhaltungen:
- EP-A- 0 306 768
- EP-A- 0 389 459
- US-A- 5 321 614

## Beschreibung

Die Erfindung betrifft ein autonom navigierendes System mit Hinderniserkennung, insbesondere mit einer intelligenten Hinderniserkennung, welche die Hindernisse klassifizieren kann.

Da autonom navigierende Systeme sich ohne einen menschlichen Fahrer fortbewegen, müssen derartige Systeme mit einer Sensorik ausgestattet sein, um zu vermeiden, daß die autonom navigierenden Systeme von im Bewegungspfad liegenden Hindernissen blockiert werden. Dazu muß zunächst das Hindernis erkannt werden. Dies geschieht üblicherweise mit Sensoren wie beispielsweise Radar- oder Berührungssensoren oder mit Bildverarbeitungssystemen. Beim Auftreffen auf ein Hindernis wird das navigierende System gestoppt und es wird im Regelfall eine Ausweichbewegung eingeleitet, um eine Kollision des autonomen Systems mit dem Hindernis zu vermeiden. Autonom navigierende Systeme bilden die Topographie, durch welche sie sich bewegen, auf eine virtuelle Karte ab, in der sämtliche Hindernisse verzeichnet sind. Diese virtuelle Karte wird ständig mit den Sensordaten aktualisiert, so daß verschwundene oder neu aufgetauchte Hindernisse eingetragen werden. Jedem Hindernis kann ein Stationaritätswert zugewiesen werden, der anzeigt, bei wievielen Sensorerfassungen das Hindernis sich in der gleichen Position und Ausrichtung befindet. So kann das navigierende System in einem langwierigen Prozeß feststehende Hindernisse wie beispielsweise Wände gewissermaßen erlernen.

Der Erfindung liegt die Aufgabe zugrunde, autonom navigierende Systeme bezüglich ihrer Handhabung von beweglichen Hindernissen zu verbessern.

Diese Aufgabe wird erfindungsgemäß mit den Merkmalen des Anspruchs 1 gelöst.

Das erfindungsgemäße autonom navigierende System hat einen Sensor, der ein in Bewegungsrichtung vorgespanntes und gegen die Vorspannkraft bewegliches Kontaktelement zur Anlage an einem Hindernis und einen die Positionsänderung des Kontaktelements messenden Detektor aufweist. Positionsänderung bedeutet hier, daß sich zumindestens ein Teil des Kontaktelements bewegt, z.B. durch Verschieben oder Verformung. Der Sensor gibt ein von der Positionsänderung abhängiges Sensorsignal an eine Auswertevorrichtung aus, welche wiederum ein erstes Hindernissignal ausgibt, das ein von dem System nicht zu bewegendes Hindernis charakterisiert, wenn das Sensorsignal größer als ein oder gleich einem Grenzwert ist und welche ein zweites Hindernissignal ausgibt, das ein von dem System zu bewegendes Hindernis charakterisiert, wenn das Sensorsignal kleiner als der Grenzwert ist. Liegt ein erstes Hindernissignal vor, kann das System entweder anhalten oder sich um das Hindernis herumbewegen. Im Falle eines zweiten Hindernissignals besteht die zusätzliche Option, daß das System sich weiterbewegt und damit das Hindernis verschiebt. Diese Art der Hinderniserkennung hat den Vorteil, daß das autonom navigierende System direkt, also ohne langwierigen Lernprozeß, erkennt, ob ein Hindernis von dem System verschiebbar ist oder nicht. Das Hindernis kann also sofort bei der ersten Erfassung durch das autonome Systeme kategorisiert werden. Desweiteren wird nicht nur festgestellt, ob ein bewegliches oder unbewegliches Hindernis vorhanden ist, sondern ob es von dem autonom navigierenden System bewegt werden kann oder nicht. Dies vergrößert den Handlungsspielraum und damit die Einsatzmöglichkeiten eines autonom navigierenden Systems.

Bei Bodenverhältnissen, die nur eine schlechte Traktion des Systems erlauben, kann es vorkommen, daß der Antrieb des Systems die Bodenhaftung kurzzeitig verliert, was zu einer Entlastung des Kontaktelements führen würde und damit zu der Annahme, daß das Hindernis verschiebbar sei. Um derartige Interpretationen zu vermeiden, kann die Auswertevorrichtung mit zusätzlicher Sensorik kombiniert werden, die Aussagen über das Traktionsverhalten des Systems erlaubt.

Bevorzugterweise enthält die Auswertevorrichtung einen Speicher mit darin abgespeicherten Sensorsignalkurven. Durch Vergleichen einer aktuell gemessenen Sensorsignalkurve mit den im Speicher abgelegten Sensorsignalkurven können verschiedene Hindernisse unterschieden oder auch kategorisiert werden. Bei einem verschiebbaren Hindernis wird typischerweise das Kontaktelement so lange gegen die Vorspannkraft bewegt, bis die auf das Hindernis übertragene Kraft ausreicht, die Haftreibung des Hindernisses zu überwinden. Danach wird die Kraft zwischen dem System und dem Hindernis etwas absinken, da sich das Hindernis nunmehr mit der geringeren Gleitreibung fortbewegt. Zum Vergleich derartiger Kurven bieten sich beispielsweise der Punkt der höchsten Amplitude, der gerade bei Überwinden der Haftreibung erreicht wird, sowie beispielsweise die mittlere Amplitude des Gleitreibungsbereichs der Sensorsignalkurve an. Bei nicht von dem System verschiebbaren Hindernissen kann z.B. anhand des ansteigenden Signalverlaufs bis zu dem Grenzwert festgestellt werden, ob das Hindernis elastisch verformbar ist. So ist das Hindernis etwa elatisch verformbar sein, wenn das Sensorsignal nicht linear ansteigt.

Der Sensor kann derart ausgebildet sein, daß zumindest ein Teil des Kontaktelements quer zur Bewegungsrichtung und auslenkbar angeordnet ist, wobei auf dem auslenkbaren Teil des Kontaktelements ein Dehnungsmeßstreifen als Detektor vorgesehen ist. Dies erlaubt einen relativ einfachen und robusten mechanischen Aufbau, da das Kontaktelement selbst die Vorspannkraft aufbringt. Das Kontaktelement kann im Auftreffbereich eines Hindernisses mit einem elastischen verformbaren Dämpferelement ausgestattet sein, welches zum einen die mechanische Belastung des Sensors reduziert und zum anderen größere Auslenkungen des Kontaktelements auf den Meßbereich vom Dehnungsmeßstreifen reduziert, bzw. eine Anpassung an unterschiedlich schwere Hindernisse oder verschiedene Geschwindigkeiten des Systems erlaubt.

In einer weiteren Ausführung kann die Positionsänderung des Kontaktelements berührungslos beispielsweise mit optischen Sensoren gemessen werden, was den Vorteil hat, daß der oft filigrane Detektor völlig von dem Kontaktelement, auf welches das Hindernis aufprallen kann, entkoppelt ist. Dies ermöglicht einen besonders robusten Aufbau des Sensors, der auch kräftigere Zusammenstöße mit einem Hindernis übersteht.

Im folgenden werden mehrere Ausführungsbeispiele der Erfindung anhand der Zeichnungen näher erläutert. Es zeigen:
- Fig. 1: ein autonom navigierendes System, das an einem Hindernis angelangt ist,
- Fig. 1a: die dazugehörige Sensorsignalkurve,
- Fig. 2: das autonom navigierende System mit einem von dem System bewegbaren Hindernis,
- Fig. 2a: die dazugehörige Sensorsignalkurve,
- Fig. 3: das autonom navigierendes System mit einem nicht von dem System zu bewegenden Hindernis,
- Fig. 3a: die dazugehörige Sensorsignalkurve,
- Fig. 4: ein erstes Ausführungsbeispiel eines Sensors und
- Fig. 5: ein zweites Ausführungsbeispiel des Sensors.

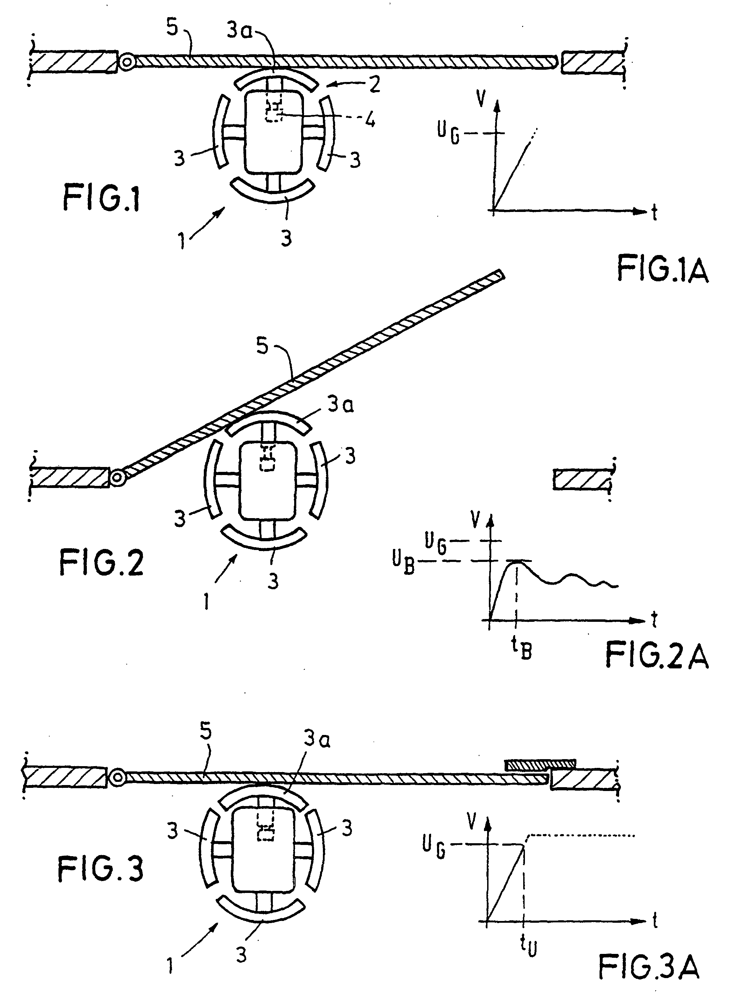

Anhand der Fign. 1 bis 3a wird zunächst das Verhalten eines erfindungsgemäßen autonom navigierenden System 1 beschrieben. Das autonom navigierende System 1 hat Sensoren 2, welche in einer Ebene parallel zu der Bodenfläche, auf der das autonom navigierende System 1 sich fortbewegt, um die Außenkontur des Systems 1 angeordnet sind. Jeder Sensor besteht aus einem Kontaktelement 3, das in einem Auftreffbereich von Hindernissen angeordnet ist und in der jeweiligen Bewegungsrichtung vorgespannt und beweglich ist. Dabei ist die für jeden Sensor 2 relevante Bewegungsrichtung diejenige Richtung, mit der sich das System 1 bewegt, bei der der jeweilige Sensor 2 sich in Bewegungsrichtung an der Vorderseite des autonom navigierenden Systems 1 befindet. Desweiteren weist der Sensor 2 einen Detektor 4 auf, der die Positionsänderung des Kontaktelements 3 relativ zu dem innerhalb des autonom navigierenden Systems 1 fest angeordneten Detektor 4 detektiert.

In dem hier beschriebenen Ausführungsbeispiel sind lediglich vier Sensoren 2 bzw. Kontaktelemente 3, die sich in den Hauptbewegungsrichtungen des Systems 1 befinden, dargestellt. Diese Aufteilung kann verfeinert werden, indem mehrere Sensoren 2 über die Außenkontur des autonom navigierenden Systems 1 verteilt werden.

In Fig. 1 ist das autonom navigierende System 1 gerade auf ein Hindernis 5 aufgetroffen. Das Hindernis 5 wird hier von einer Tür gebildet, welche in Bewegungsrichtung des Systems 1 geöffnet werden kann, sofern sie nicht verschlossen ist. Sobald das in Bewegungsrichtung vordere Kontaktelement 3a das Hindernis 5 berührt, registriert der Detektor 4 die Positionsveränderung des Kontaktelements 3a, woraufhin der Sensor 2 ein Sensorsignal an eine nicht dargestellte Auswerteeinrichtung ausgibt. Die Auswerteeinrichtung kann die Bewegung des Systems 1 beeinflussen. Das System 1 setzt seine Bewegung zunächst jedoch in unveränderter Richtung fort, was dazu führt, daß das Kontaktelement 3a gegen die Vorspannkraft und entgegen der Bewegungsrichtung bewegt wird.

Der Sensor 2 gibt zeitlich aufeinanderfolgend Sensorsignalwerte aus, welche in Fig. 1a in einer Kurve dargestellt sind. Die Sensorsignalwerte sind als Spannungswerte über der Zeit aufgetragen. Der Betrag des Sensorsignals wächst mit der Größe der Positionsänderung des Kontaktelements 3a. Liegt das Kontaktelement 3 an keinem Hindernis an, befindet es sich in einer Ruheposition, welche durch den Betrag der Vorspannkraft bestimmt wird. Bei Kontakt mit einem Hindernis wird das Kontaktelement 3 aus dieser Ruheposition bewegt, wobei der Wert des Sensorsignals ansteigt, bis es in maximaler Auslenkung von einer Begrenzung gestoppt wird. Ein Grenzwert U_{G} des Sensorsignals ist kurz vor dieser maximalen Auslenkung gewählt.

In den Fign. 1 und 1a ist lediglich der Beginn des Auftreffens des autonom navigierenden Systems 1 auf das Hindernis 5 gezeigt, so daß für das autonom navigierende System 1 noch unklar ist, ob das Hindernis 5 in Form der Tür sich von dem System 1 öffnen läßt, wobei das Sensorsignal unterhalb des Grenzwertes U_{G} bleiben würde, oder ob die Tür sich von dem System 1 nicht öffnen läßt, was zu einem Sensorsignalwert größer dem Grenzwert U_{G} führen würde.

In dem in den Fign. 2 und 2a gezeigten Fall ist die Antriebskraft des autonom navigierenden Systems 1 groß genug, das Hindernis 5 zu bewegen, d.h. die Tür zu öffnen. In Fig. 2a ist ein beispielhafter Verlauf einer Sensorsignalkurve für ein von dem System 1 zu bewegendes Hindernis 5 gezeigt. Bis zu dem Zeitpunkt t_{B} steigt das Sensorsignal an, bis an dem Zeitpunkt t_{B} die Haftreibung des Hindernisses 5 überwunden wird, woraufhin sich das Hindernis 5 zu bewegen anfängt. Der maximale Betrag U_{B} des Sensorsignals zum Zeitpunkt t_{B} ist kleiner als der Grenzwert U_{G} des Sensorsignals.

Nachdem das System 1 das Hindernis 5 in Bewegung gesetzt hat, also nach dem Zeitpunkt t_{B} wird das Kontaktelement 3a durch die Vorspannkraft wieder etwas in Bewegungsrichtung des Systems 1 bewegt, denn das Hindernis 5 setzt dem System 1, das mit dem Kontaktelement 3a an dem Hindernis 5 anliegt, nur noch einen geringeren Widerstand entgegen, nämlich den der Gleitreibung anstatt den der Haftreibung. In der in Fig. 2a dargestellten Sensorsignalkurve spiegelt sich dies dadurch wieder, daß nach dem Zeitpunkt t_{B} der Betrag des Sensorsignals zunächst abfällt, um dann um einen niedrigeren Mittelwert herum zu schwingen. Diese Schwingungen werden durch den mehr oder weniger unregelmäßigen Betrag der Gleitreibung hervorgerufen.

Sowohl der Zeitpunkt t_{B} und der Betrag U_{B} des Sensorsignales, welche das Inbewegungsetzen des Hindernisses 5 charakterisieren, als auch der Betrag des Sensorsignals und das Schwingungsmuster in der Gleitreibungsphase sind abhängig von dem Gewicht des Hindernisses 5 und den Oberflächen- und Reibungsverhältnissen zwischen dem Hindernis 5 und der Fläche, zu der es relativ bewegt wird. Daher lassen sich Hindernisse anhand der Sensorsignalkurven, von denen beispielhaft eine in Fig. 2a gezeigt ist, kategorisieren. Speichert man diese Sensorsignalkurven in dem autonomen System 1 ab, ist nicht nur die Entscheidung möglich, ob das Hindernis von dem autonom navigierenden System 1 beweglich ist, sondern auch zur welcher Klasse von Hindernissen es gehört oder sogar die exakte Bestimmung des Hindernisses, wenn dieses vorher katalogisiert wurde.

In den Fign. 3 und 3a ist der Fall dargestellt, daß das autonom navigierende System 1 das Hindernis 5 nicht bewegen kann, d.h. die mit einem Riegel verschlossene Tür nicht öffnen kann. In diesem Fall bewegt sich das System 1 gegen das Hindernis 5, wobei das Kontaktelement 3a immer weiter aus der Ruheposition ausgelenkt wird, bis ein Grenzwert U_{G} des Sensorsignals erreicht wird. Dies geschieht zu dem Zeitpunkt t_{U}, an dem feststeht, daß es sich um ein unbewegliches Hindernis handelt. Der Grenzwert U_{G} ist zweckmäßigerweise so eingestellt, daß er kleiner ist als derjenige Meßwert, bei dem das Kontaktelement 3a in die Begrenzung geht. Bei Erreichen des Grenzwerts U_{G} hält die Auswertevorrichtung das System an oder läßt das System 1 das Hindernis 5 auf einer Alternativroute umfahren.

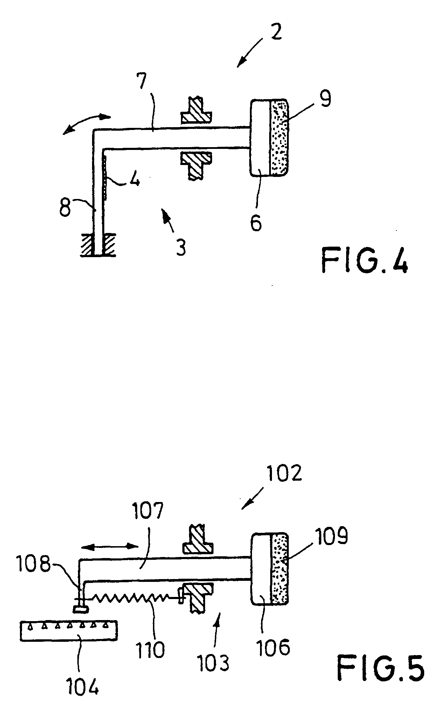

In Fig. 4 ist ein erstes Ausführungsbeispiel eines Sensors 2 gezeigt. Das Kontaktelement 3 des Sensors 2 besteht aus einer quer zur Bewegungsrichtung angeordneten Schiene 6, welche an einem in Bewegungsrichtung verschiebbaren Längsträger 7 befestigt ist. Der Längsträger 7 geht in einen Querträger 8 über, der wiederum quer zur Bewegungsrichtung angeordnet ist. An dem von dem Längsträger 7 abgewandten Ende ist der Querträger 8 fest in dem autonom navigierenden System 1 verankert. Im Übergangsbereich zwischen Längsträger 7 und Querträger 8 ist ein Detektor 4 in Form eines Dehnungsmeßstreifens angebracht. Der Detektor 4 befindet sich auf derjenigen Fläche des Querträgers 8, die in Bewegungsrichtung zeigt.

Trifft das System 1 auf ein Hindernis auf, wird der Längsträger 7 entgegen der Fahrtrichtung, also hier nach links, bewegt, was dazu führt, daß der Querträger 8 nach links gebogen wird. Durch diese Verbiegung wird der Dehnungsmeßstreifen verlängert, was einen Anstieg des Sensorsignals zur Folge hat. Verschwindet das Hindernis oder ist die Haftreibung überwunden, bewegt sich das Kontaktelement 3 aufgrund der durch den deformierten Querträger aufgebrachten Vorspannkraft wieder in Bewegungsrichtung, also nach rechts. An der Vorderseite der Schiene 6, also derjenigen Fläche, welche in Bewegungsrichtung zeigt, ist ein elastisch verformbares Dämpferelement 9, z.B. aus Moosgummi, angebracht, was den Aufprallstoß dämpft und zudem größere Auslenkungen auf den Meßbereich von Dehnungsmeßstreifen reduziert.

Anhand von Fig. 5 wird ein zweites Ausführungsbeispiel eines Sensors 102 beschrieben. Das Kontaktelement 103 des Sensors 102 weist ebenfalls eine Schiene 106 auf, die an einem Längsträger 107 angebracht ist. Die Vorderseite der Schiene 106 ist wiederum mit einem elastisch verformbaren Dämpferelement 109 versehen. An dem zweiten Ende des Längsträgers 107 befindet sich jedoch ein Arm 108, der nicht verankert ist, sondern zusammen mit dem Längsträger 107 in Bewegungsrichtung des Systems 1 beweglich ist. Der Arm 108 dient als Referenz für einen Detektor 104 in Form einer optischen Sensorleiste, welche parallel zu der Bewegungsrichtung angeordnet ist. Das Kontaktelement 103 ist über eine Feder 110, welche an dem Arm 108 und an einem relativ zu dem System 1 ortsfesten Punkt befestigt ist, vorgespannt. Trifft das autonom navigierende System 1 mit dem Kontaktelement 103 auf ein Hindernis auf, wird das Kontaktelement 103 entgegen der Fahrtrichtung, also nach links ausgelenkt, wobei die Positionsänderung anhand der optischen Sensorleiste erfaßt wird. Ist kein Hindernis mehr vorhanden oder der Punkt der Haftreibung des Hindernisses überwunden, wird das Kontaktelement 103 angetrieben durch die Rückstellkraft der Feder 110 in Bewegungsrichtung, also nach rechts bewegt.

## Patentansprüche

1. Autonom navigierendes System mit Hinderniserkennung, mit
- einem Sensor (2;102), der ein in Bewegungsrichtung vorgespanntes und gegen eine Vorspannkraft bewegliches Kontaktelement (3;103) und einen die Positionsänderung des Kontaktelements (3;103) messenden Detektor (4;104) hat und der ein von der Positionsänderung abhängiges Sensorsignal ausgibt,
- einer mit dem Sensor (2;102) verbundenen Auswertevorrichtung, welche ein erstes Hindernissignal ausgibt, das ein von dem System (1) nicht zu bewegendes Hindernis (5) charakterisiert, wenn das Sensorsignal größer als ein oder gleich einem Grenzwert (U_{G}) ist, und welche ein zweites Hindernissignal ausgibt, das ein von dem System (1) zu bewegendes Hindernis (5) charakterisiert, wenn das Sensorsignal kleiner als der Grenzwert (U_{G}) ist, wobei das System (1) auf ein erstes Hindernissignal hin anhält oder sich um das Hindernis (5) herumbewegt und im Falle eines zweiten Hindernissignals die zusätzliche Option hat, sich weiterzubewegen und damit das Hindernis (5) zu verschieben.

2. Autonom navigierendes System nach Anspruch 1, **dadurch gekennzeichnet, daß** die Auswertevorrichtung einen Speicher mit darin abgelegten Sensorsignalkurven zur Unterscheidung von Hindernissen (5) aufweist, wobei die gemessene Sensorsignalkurve mit den gespeicherten Sensorsignalkurven verglichen wird.

3. Autonom navigierendes System nach Anspruch 1 oder 2, **dadurch gekennzeichnet, daß** zumindest ein Teil des Kontaktelements (3) quer zur Bewegungsrichtung und auslenkbar angeordnet ist, wobei auf dem Kontaktelement (3) ein Dehnungsmeßstreifen als Detektor (4) vorgesehen ist.

4. Autonom navigierendes System nach Anspruch 3, **dadurch gekennzeichnet, daß** auf dem Kontaktelement (3) im Auftreffbereich eines Hindernisses ein elastisch verformbares Dämpferelement (9) angeordnet ist.

5. Autonom navigierendes System nach Anspruch 1 oder 2, **dadurch gekennzeichnet, daß** die Positionsänderung des Kontaktelements (103) berührungslos gemessen wird.

6. Verfahren zur Behandlung von Hindernissen für ein sich in einer Bewegungsrichtung bewegendes autonom navigierendes System (1) mit den folgenden Schritten:
- Messen der Kraft zwischen dem autonom navigierenden System (1) und einem Hindernis (5) bei Kontakt miteinander,
- Klassifizierung des Hindernisses (5) anhand der Kraft, wobei
- bei einer Kraft größer als ein Grenzwert (U_{G}) das Hindernis (5) als nicht von dem autonom navigierenden System (1) bewegbar erkannt wird und
- bei einer Kraft geringer als der Grenzwert (U_{G}) das Hindernis (5) als von dem autonom navigierenden System (1) bewegbar erkannt wird,
- Anhalten des autonom navigierenden Systems (1) oder Umfahren des Hindernisses (5), falls das Hindernis (5) als nicht beweglich erkannt ist,
- Anhalten des autonom navigierenden Systems (1), Umfahren des Hindernisses (5) oder Weiterfahren des autonom navigierenden Systems (1) und damit Weiterbewegen des Hindernisses (5), falls das Hindernis (5) als beweglich erkannt ist.

## Claims

1. An autonomous navigating system with obstacle recognition comprising:
- a sensor (2; 102) having a contact element (3; 103) prestressed in the direction of movement and movable against the prestressed force and a detector (4; 104) measuring the change in position of the contact element (3; 103), and providing a sensor signal depending on the change in position,
- an evaluating device connected with the sensor (2; 102), which provides a first obstacle signal representing an obstacle (5) that cannot be moved by the system (1), when the sensor signal is greater or equal to a limit value (U_{G}), and which provides a second obstacle signal representing an obstacle (5) that can be moved by the system (1), when the sensor signal is lower than the limit value (U_{G}), wherein the system (1) stops in response to a first obstacle signal or moves around the obstacle (5) and, upon a second obstacle signal, has the additional option to move on and thereby displace the obstacle (5).

2. The autonomous navigating system of claim 1, **characterized in that** the evaluating device has a memory with sensor signal curves stored therein for differentiating between obstacles (5), the measured sensor signal curve being compared to the stored sensor signal curves.

3. The autonomous navigating system of claim 1 or 2, **characterized in that** at least a portion of the contact element (3) is arranged transverse to the direction of movement and deflectable, the contact element (3) being provided with a wire strain gauge as a detector (4).

4. The autonomous navigating system of claim 3, **characterized in that** an elastically deformable damping element (9) is arranged on the contact element (3) in a portion where an obstacle will make contact.

5. The autonomous navigating system of claim 1 or 2, **characterized in that** the change in position of the contact element (103) is measured contactless.

6. A method for the handling of obstacles for an autonomous navigating system (1) moving in a direction of movement, comprising the following steps:
- measuring the force between the autonomous navigating system (1) and an obstacle (5) upon contact,
- classifying the obstacle (5) based on the force, where
- with a force greater than a limit value (U_{G}), the obstacle (5) is recognized as not being movable by the autonomous navigating system (1), and
- with a force lower than the limit value (U_{G}), the obstacle (5) is recognized as being movable by the autonomous navigating system (1),
- stopping the autonomous navigating system (1) or moving around the obstacle (5) if the obstacle (5) has been recognized as not movable,
- stopping the autonomous navigating system (1), moving around the obstacle (5) or moving the autonomous navigating system (1) on and thereby displacing the obstacle (5) if the obstacle (5) has been recognized as mobile.

## Revendications

1. Système de navigation autonome avec identification d'obstacles, comportant:
- un capteur (2; 102) qui possède un élément de contact (3; 103), qui est précontraint dans une direction de déplacement et est mobile à l'encontre d'une force de précontrainte, et un détecteur (4; 104) qui mesure le changement de position de l'élément de contact (3; 103), et qui délivre un signal de capteur qui dépend du changement de position;
- un dispositif d'évaluation, qui est relié au capteur (2; 102) et délivre un premier signal d'obstacle, qui **caractérise** un obstacle (5) qui ne doit pas être déplacé par le système (1), lorsque le signal du capteur est supérieur ou égal à une valeur limite (U₀), et qui délivre un second signal d'obstacle, qui **caractérise** un obstacle (5) devant être déplacé par le système (1), lorsque le signal du capteur est inférieur à la valeur limite (U₀), le système (1) s'arrêtant sous l'effet d'un premier signal d'obstacle ou bien se déplaçant autour de l'obstacle (5) et, dans le cas d'un second signal d'obstacle, disposant de l'option supplémentaire consistant à continuer de se déplacer et à déplacer de ce fait l'obstacle (5).

2. Système de navigation autonome selon la revendication 1, **caractérisé en ce que** le dispositif d'évaluation comporte une mémoire pourvue de courbes, qui y sont mémorisées, de signaux de capteurs servant à établir une distinction entre des obstacles (5), la courbe mesurée du signal du capteur étant comparée aux courbes mémorisées de signaux de capteurs.

3. Système de navigation autonome selon la revendication 1 ou 2, **caractérisé en ce qu'**au moins une partie de l'élément de contact (4) est disposée transversalement par rapport à la direction de déplacement et de manière à pouvoir être déviée, une jauge extensométrique étant prévue en tant que détecteur (4) sur l'élément de contact (3).

4. Système de navigation autonome selon la revendication 3, **caractérisé en ce qu'**un élément d'amortissement (9) déformable élastiquement est disposé sur l'élément de contact (3) dans la zone d'impact.

5. Système de navigation autonome selon la revendication 1 ou 2, **caractérisé en ce que** le changement de position de l'élément de contact (103) est mesuré sans contact.

6. Procédé pour manipuler des obstacles pour un système de navigation autonome (1) de déplacement dans une direction de déplacement, comprenant les étapes suivantes:
- mesure de la force entre le système de navigation autonome (1) et un obstacle (5) dans le cas d'un contact entre le système et l'obstacle,
- classification de l'obstacle (5) en référence à la force, auquel cas
- dans le cas d'une force supérieure à une valeur limite (U_{Q}), l'obstacle (5) est identifié comme n'étant pas le système de navigation autonome (1), et
- dans le cas d'une force inférieure à la valeur limite (U_{G}), l'obstacle (5) est identifié comme étant déplaçable par le système de navigation autonome (1),
- arrêt du système de navigation autonome (1) ou contournement de l'obstacle (5) dans le cas où l'obstacle (5) est identifié comme n'étant pas mobile,
- arrêt du système de navigation autonome (1), contournement de l'obstacle (5) ou poursuite du déplacement du système de navigation autonome (1) et par conséquent poursuite du déplacement de l'obstacle (5), dans le cas où l'obstacle (5) est identifié comme étant mobile.
